# EUROPÄISCHE PATENTSCHRIFT

(11) **EP 2 871 305 B1**
(45) Veröffentlichungstag und Bekanntmachung des Hinweises auf die Patenterteilung: **10.01.2018**
(21) Anmeldenummer: 14191481.2
(22) Anmeldetag: 03.11.2014
(51) Int. Cl.: E04G 15/06, E04G 21/18, G01C 15/02, H01F 7/02, B28B 23/00, G01V 15/00

(54) **VERFAHREN UND VORRICHTUNG ZUM MARKIEREN EINES MESSPUNKTS IN EINER GEGOSSENEN BETONDECKE**
METHOD FOR MARKING A MEASUREMENT POINT IN A CAST CONCRETE CEILING
PROCÉDÉ DESTINÉ AU REPÉRAGE D'UN POINT DE MESURE DANS UN REVÊTEMENT EN BÉTON COULÉ

(30) Priorität: 06.11.2013 AT 507392013
(43) Veröffentlichungstag der Anmeldung: 13.05.2015
(73) Patentinhaber: KE-KELIT Kunststoffwerk Gesellschaft m.b.H., 4020 Linz (AT)
(72) Erfinder: Ratschmann, Elmar, 4202 Hellmonsödt (AT); Pöchhacker, Martin, 3251 Purgstall (AT)
(74) Vertreter: Patentanwaltskanzlei Hübscher

(56) Entgegenhaltungen:
- DE-C1- 19 530 429
- JP-A- H11 336 234
- JP-A- 2001 277 223
- JP-A- 2006 097 284

## Beschreibung

Die Erfindung bezieht sich auf eine Vorrichtung zum Markieren eines Messpunkts in einer gegossenen Betondecke mit einem an einer Schalung befestigbaren ringförmigen Permanentmagneten umfassenden Markierungskörper, der mit Hilfe eines Befestigungsstifts auf der Schalung befestigbar ist.

Zur Klimatisierung von Räumen ist es bekannt, Wärmetauscher aus durch Abstandhalterprofile zu Flächenregistern zusammengefassten Rohrschlangen für einen Wärmeträger in die Betondecke einzubetten. Diese Flächenregister werden mit einem vorgegebenen Abstand voneinander auf der Schalung verlegt, bevor die Betondecke mit einer entsprechenden Bewehrung gegossen wird. Da beispielsweise bei Bürogebäuden erst nachträglich die Raumaufteilung festgelegt wird, ist dafür zu sorgen, dass die zu errichtenden Trennwände im Zwischenbereich zwischen den Flächenregistern der Wärmetauscher verlaufen, um ein irrtümliches Anbohren der Rohrschlangen zu vermeiden. Zu diesem Zweck werden auf der Schalung für die Betondecke Messpunkte festgelegt, die üblicherweise durch in die Deckenschalung geschlagene Nägel markiert werden. Die mit ihren Köpfen in die gegossene Betondecke vorstehenden Nägel verbleiben beim Entschalen in der Betondecke und bilden Markierungskörper, die den Verlauf der Abstandsfugen zwischen den einzelnen Flächenregistern der Wärmetauscher anzeigen. Da die Nagelspitzen nach unten über die Betondecke vorstehen, werden sie häufig abgetrennt, um das Auftragen einer Putzschicht nicht zu behindern. Damit gehen aber die durch die Nägel gebildeten Markierungspunkte verloren. Werden die Nagelspitzen erst nach dem Auftragen einer Putzschicht gekürzt, so wird die Putzschicht durch die Nägel sichtbar unterbrochen. Außerdem besteht die Gefahr, dass sich durch die Korrosion der Nägel Rostflecken in der Putzschicht abzeichnen.

Um Gewindehülsen zur Aufnahme von Konstruktionsteilen in vorgegebenen Positionen in eine Betondecke eingießen zu können, ist es außerdem bekannt (JP H11 336234 A), diese Gewindehülsen mittels eines an der Schalung für die Betondecke befestigten Ringmagneten in einer gegenüber der Schalung vorgegebenen Position lösbar festzuhalten, sodass bei der Entschalung der Ringmagnet mit der Schalung von der Betondecke gelöst wird und die in der Betondecke verbleibende Schraubhülse durch die vom Ringmagneten verursachte Aussparung in der Betondecke sichtbar bleibt. Dieses Dokument offenbart alle technischen Merkmale des Oberbegriffs des Anspruchs 1. Gemäß der JP 2006-97284 A wird in die in eine Betondecke einzugießende Gewindehülse zur Aufnahme von Konstruktionsteilen ein Gehäuse mit einem Ringmagneten eingeschraubt, mit dessen Hilfe die Gewindehülse an der Schalung aus einem Eisenwerkstoff festgehalten wird. Zur genauen Positionierung wird durch eine entsprechende Durchtrittsbohrung in der Schalung ein Zentrierstift eingesetzt, der den Ringmagneten und eine anschließende Gehäusebohrung durchsetzt. Nach der Entschalung kann das Gehäuse mit dem Ringmagneten aus der Gewindehülse ausgeschraubt werden, die dann für das Einschrauben eines Konstruktionsteils bereit ist.

Der Erfindung liegt somit die Aufgabe zugrunde, eine gegossene Betondecke mit Flächenregistern zur Raumklimatisierung so mit Markierungskörpern auszustatten, dass die Markierungskörper ohne Beeinträchtigung der auf der Unterseite der Betondecke aufgebrachten Putzschicht in einfacher Weise erfasst werden können.

Ausgehend von einer Vorrichtung der eingangs geschilderten Art löst die Erfindung die gestellte Aufgabe dadurch, dass der Markierungskörper eine Abstützung für den Befestigungsstift und eine Solltrennstelle zwischen dem ringförmigen Permanentmagneten und der Abstützung bildet.

Mit Hilfe dieses Befestigungsstifts können die ringförmigen Permanentmagneten in einfacher Weise auf der Schalung befestigt werden, wobei die Solltrennstelle zwischen den Permanentmagneten und der jeweiligen Abstützung für den Befestigungsstift dafür sorgt, dass der Befestigungsstift mit der Schalung von der Betondecke gelöst werden kann.

Besonders einfache Konstruktionsverhältnisse ergeben sich in diesem Zusammenhang dadurch, dass der Markierungskörper eine an den ringförmigen Permanentmagneten anschließende, koaxiale Kunststoffhülse aufweist, die eine die Solltrennstelle bildende Einschnürung zur Abstützung eines Kopfs des Befestigungsstifts bildet. Die Kunststoffhülse kann mit einer entsprechenden Einschnürung eine für die Befestigung des ringförmigen Permanentmagneten ausreichende Abstützung für den Befestigungsstift ergeben, ohne das Durchziehen des Kopfs des Befestigungsstifts durch die Einschnürung beim Entschalen der Betondecke ernsthaft zu behindern. Der Befestigungsstift könnte als Schraube ausgebildet sein. Einfachere Montagebedingungen ergeben sich allerdings beim Einsatz von Nägeln als Befestigungsstifte. Die Haftreibung zwischen dem Nagelschaft und der Schalung reicht durchaus für ein Überwinden der durch die Einschnürung der Kunststoffhülse gebildeten Solltrennstelle aus. Die ringförmigen Permanentmagneten können in eine ringförmige stirnseitig offene Aufnahmekammer am Ende der Kunststoffhülse eingesetzt werden. Da die wirksamen Magnetkräfte vom Abstand zwischen dem Ortungsring und dem ringförmigen Permanentmagneten abhängen, bringt das bündige Einsetzen des ringförmigen Permanentmagneten in die stirnseitig offene Aufnahmekammer entsprechende Abstandsvorteile mit sich.

Damit die Gefahr eines Ausreißens des Markierungskörpers aus der Betondecke bei ihrer Entschalung gebannt werden kann, kann die an den ringförmigen Permanentmagneten angesetzte Kunststoffhülse mit äußeren Umfangsrippen versehen sein, die die Rückhaltewirkung durch eine Verzahnung mit der Betondecke unterstützen.

Wie bereits ausgeführt wurde, werden die zu Flächenregistern zusammengefassten Rohrschlangen der Wärmetauscher zur Raumklimatisierung mit einem vorgegebenen gegenseitigen Randabstand auf der Schalung verlegt. Die Markierungskörper bestimmen diese Randverläufe und können daher auch als Verlegehilfe für die Flächenregister der Wärmetauscher genützt werden. Zu diesem Zweck können entsprechende Rohrstutzen auf die Kunststoffhülse aufgesteckt werden, sodass die vorstehenden Rohrstutzen die freizulassenden Abstandsfugen zwischen den Flächenregistern bestimmen. Sind die Rohrstutzen mit quer zu ihnen verlaufenden Abstandhaltern versehen, so können die Flächenregister der Wärmetauscher entlang dieser Abstandhalter verlegt werden.

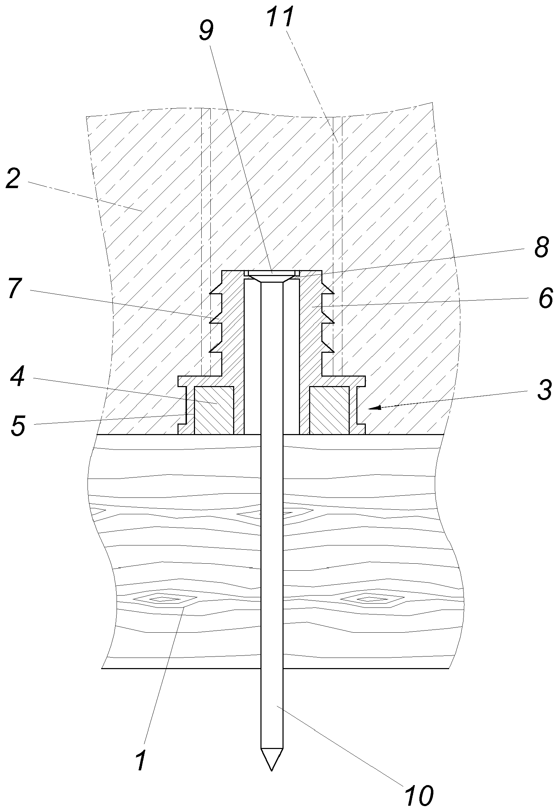

In der Zeichnung wird eine erfindungsgemäße Vorrichtung zum Markieren eines Messpunkts in einer gegossenen Betondecke in einem schematischen Längsschnitt gezeigt.

Die Zeichnung lässt eine Schalung 1 für eine zu gießende Betondecke 2 erkennen, wobei auf der Schalung 1 Messpunkte durch Markierungskörper 3 festgelegt werden sollen, die beim Entschalen der ausgehärteten Betondecke 2 in der Betondecke 2 verbleiben. Die Markierungskörper 3 umfassen einen ringförmigen Permanentmagneten 4, der in eine stirnseitig offene ringförmige Aufnahmekammer 5 eingesetzt ist, an die sich eine zum ringförmigen Permanentmagneten 4 koaxiale Kunststoffhülse 6 anschließt. Diese mit Umfangsrippen 7 versehene Kunststoffhülse 6 besitzt eine Einschnürung 8, die als Abstützung für den Kopf 9 eines vorzugsweise als Nagel ausgebildeten Befestigungsstifts 10 dient.

Um einen auf der Schalung 1 vor dem Gießen der Betondecke 2 vermessenen Messpunkt mit Hilfe des Markierungskörpers 3 festzulegen, wird der Markierungskörper 3 mit dem ringförmigen Permanentmagneten 4 konzentrisch gegenüber dem Messpunkt ausgerichtet und in dieser Lage mit Hilfe des Befestigungsstifts 10 auf der Schalung 1 befestigt, indem der Befestigungsstift 10 in die Schalung 1 eingeschlagen wird, bis der Kopf 9 an der Einschnürung 8 ein Widerlager findet. Nach der Festlegung der Messpunkte durch die an der Schalung 1 in der beschriebenen Weise befestigten Markierungskörper 3 können zu Flächenregistern zusammengefasste Wärmetauscher auf der Schalung 1 über entsprechende Abstandhalterprofile verlegt werden, wobei die Markierungskörper 3 den Verlauf der Abstandsfugen zwischen den einzelnen Flächenregistern vorgeben. Zur Verlegehilfe können auf die Kunststoffhülsen 6 Rohrstutzen 11 aufgesteckt werden, die vorzugsweise Abstandhalter für die Flächenregister der Wärmetauscher tragen. Nach dem Verlegen der Flächenregister und dem Aufbringen einer entsprechenden Deckenbewehrung kann die Betondecke 2 in herkömmlicher Weise gegossen werden. Zur Entschalung der ausgehärteten Betondecke 2 wird die Schalung 1 von der Betondecke 2 gelöst, wobei die Köpfe 9 der Befestigungsstifte 10 durch die als Solltrennstelle ausgebildeten Einschnürungen 8 aus den Kunststoffhülsen 6 ausgezogen werden. Der Solltrennstelle kommt die Aufgabe zu, das Ausziehen des Befestigungsstifts 10 beim Überschreiten einer vorgegebenen Ausziehkraft zu ermöglichen. Dies kann durch einen Trennbruch im Bereich der Einschnürung 8 oder des Kopfs 9 des Befestigungsstifts 10 erfolgen. Während des Ausziehens der Befestigungsstifte 10 aus den Kunststoffhülsen 6 werden die Kunststoffhülsen 6 mit den ringförmigen Permanentmagneten 4 durch die Betondecke 2 zurückgehalten, sodass nach der Entschalung die ringförmigen Permanentmagneten 4 bündig mit der Unterfläche der Betondecke 2 abschließen. Die Betondecke 2 kann daher auf der Unterseite in üblicher Weise mit einer Putzschicht versehen werden, die die Markierungskörper 3 vollständig abdeckt. Trotz dieser Abdeckung können die Markierungskörper 3 in einfacher Weise geortet werden, weil zu diesem Zweck lediglich entsprechende Ringe aus einem ferromagnetischen Werkstoff oder Magnetringe entlang der Putzschicht bewegt werden müssen. Diese Ortungsringe werden durch die Putzschicht hindurch von den ringförmigen Permanentmagneten 4 konzentrisch angezogen, sodass die konzentrisch an die ringförmigen Permanentmagneten 4 angezogenen Ortungsringe die durch die Markierungskörper 3 auf die Betondecke 2 übertragenen Messpunkte wiedergeben, die durch die Ortungsringe auf der Putzschicht angezeichnet oder in die Putzschicht gebohrt werden können.

## Patentansprüche

1. Vorrichtung zum Markieren eines Messpunkts in einer gegossenen Betondecke (2) mit einem an einer Schalung (1) befestigbaren ringförmigen Permanentmagneten (4) umfassenden Markierungskörper (3), der mit Hilfe eines Befestigungsstifts (10) lösbar auf der Schalung (1) befestigbar ist, **dadurch gekennzeichnet, dass** der Markierungskörper (3) eine Abstützung für den Befestigungsstift (10) und eine Solltrennstelle zwischen dem ringförmigen Permanentmagneten (4) und der Abstützung bildet.

2. Vorrichtung nach Anspruch 1, **dadurch gekennzeichnet, dass** der Markierungskörper (3) eine an den ringförmigen Permanentmagneten (4) anschließende, koaxiale Kunststoffhülse (6) aufweist, die eine die Solltrennstelle bildende Einschnürung (8) zur Abstützung eines Kopfs (9) des Befestigungsstifts (10) bildet.

3. Vorrichtung nach Anspruch 2, **dadurch gekennzeichnet, dass** die Kunststoffhülse (6) an eine ringförmige, stirnseitig offene Aufnahmekammer (5) für den ringförmigen Permanentmagneten (4) angesetzt ist.

4. Vorrichtung nach Anspruch 2 oder 3, **dadurch gekennzeichnet, dass** die an den ringförmigen Permanentmagneten (4) angesetzte Kunststoffhülse (6) mit äußeren Umfangsrippen (7) versehen ist.

5. Vorrichtung nach einem der Ansprüche 2 bis 4, **dadurch gekennzeichnet, dass** auf die Kunststoffhülse (6) ein Rohrstutzen (11) aufsteckbar ist.

## Claims

1. Apparatus for marking a measurement point in a cast concrete ceiling (2), comprising a marking body (3) which comprises an annular permanent magnet (4) which can be fastened to a formwork (1), said marking body being able to be detachably fastened to the formwork (1) with the aid of a fastening pin (10), **characterised in that** the marking body (3) forms a support for the fastening pin (10) and a predetermined separating point between the annular permanent magnet (4) and the support.

2. Apparatus as claimed in claim 1, **characterised in that** the marking body (3) has a coaxial synthetic material sleeve (6) which adjoins the annular permanent magnet (4) and which forms a constriction (8), forming the predetermined separating point, for supporting a head (9) of the fastening pin (10).

3. Apparatus as claimed in claim 2, **characterised in that** the synthetic material sleeve (6) is attached to an annular receiving chamber (5), which is open at the end face, for the annular permanent magnet (4).

4. Apparatus as claimed in claim 2 or 3, **characterised in that** the synthetic material sleeve (6) attached to the annular permanent magnet (4) is provided with outer circumferential ribs (7).

5. Apparatus as claimed in any one of claims 2 to 4, **characterised in that** a pipe connection (11) can be fitted onto the synthetic material sleeve (6).

## Revendications

1. Dispositif de marquage d'un point de mesure dans un revêtement en béton coulé (2) avec un corps de marquage (3) comprenant des aimants permanents (4) en forme d'anneau pouvant être fixés au niveau d'un coffrage (1), qui peut être fixé de manière amovible sur le coffrage (1) à l'aide d'une tige de fixation (10), **caractérisé en ce que** le corps de marquage (3) forme un appui pour la tige de fixation (10) et une zone de séparation théorique entre l'aimant permanent (4) en forme d'anneau et l'appui.

2. Dispositif selon la revendication 1, **caractérisé en ce que** le corps de marquage (3) présente un manchon en matière plastique (6) coaxial, raccordé au niveau de l'aimant permanent (4) en forme d'anneau, qui forme un rétrécissement (8) formant la zone de séparation théorique pour appui d'une tête (9) de la tige de fixation (10).

3. Dispositif selon la revendication 2, **caractérisé en ce que** le manchon en matière plastique (6) est placé au niveau d'un compartiment de réception (5) en forme d'anneau, ouvert côté face, pour l'aimant permanent (4) en forme d'anneau.

4. Dispositif selon la revendication 2 ou 3, **caractérisé en ce que** le manchon en matière plastique (6) placé au niveau de l'aimant permanent (4) en forme d'anneau est muni de nervures périphériques (7) extérieures.

5. Dispositif selon l'une des revendications 2 à 4, **caractérisé en ce qu'**une tubulure (11) peut être fixée sur le manchon en matière plastique (6).
